# EUROPÄISCHE PATENTSCHRIFT

(11) **EP 3 242 032 B1**
(45) Veröffentlichungstag und Bekanntmachung des Hinweises auf die Patenterteilung: **06.11.2019**
(21) Anmeldenummer: 16168323.0
(22) Anmeldetag: 04.05.2016
(51) Int. Cl.: F04D 13/06, F04D 29/02, F04D 29/62

(54) **SPALTROHRPUMPE WOBEI SOWOHL DER MOTORSTATOR ALS AUCH DAS ELEKTRONIKMODUL VERGOSSEN SIND**
CANNED PUMP WHEREIN BOTH THE MOTOR STATOR AND THE ELECTRONIC MODULE ARE POTTED
POMPE Ä ENTREFER DANS LAQUELLE AUSSI BIEN LE STATOR DU MOTEUR QUE L'UNITÉ ÉLECTRONIQUE SONT ENROBÉS

(43) Veröffentlichungstag der Anmeldung: 08.11.2017
(73) Patentinhaber: Grundfos Holding A/S, 8850 Bjerringbro (DK)
(72) Erfinder: Brösamle, Pino, 71679 Asperg (DE); Blaser, Georg, 71679 Asperg (DE)
(74) Vertreter: Patentanwälte Vollmann Hemmer Lindfeld Partnerschaft mbB

(56) Entgegenhaltungen:
- WO-A2-2012/062638
- JP-A- 2001 304 166
- JP-A- 2004 183 595
- US-A1- 2013 028 765

## Beschreibung

### Beschreibung

Die Erfindung betrifft ein Umwälzpumpenaggregat gemäß dem Oberbegriff des Anspruchs 1. Das Dokument JP 2001 304166 A offenbart ein solches Pumpenaggregat.

Es sind Umwälzpumpenaggregate, insbesondere für Heizungsanlagen oder zur Brauchwasserumwälzung bekannt, welche ein Pumpengehäuse mit einem darin rotierenden Laufrad und einem direkt mit dem Pumpengehäuse verbundenen Antriebsmotor aufweisen. In modernen Umwälzpumpenaggregaten ist darüber hinaus noch eine Motorelektronik zur Ansteuerung des Antriebsmotors vorhanden, welche insbesondere einen Frequenzumrichter aufweisen kann. Die Antriebsmotoren sind meist als nasslaufende Motoren ausgebildet, das heißt sie weisen ein zwischen dem Rotor und dem Stator des Antriebsmotors angeordnetes Spaltrohr auf, so dass der Rotor in den zu fördernden Medium rotiert. Eine spezielle Ausgestaltung dieser Umwälzpumpen sind Umwälzpumpen mit einem sogenannten Kugelmotor, bei welchem eine Baueinheit aus Laufrad und Rotor auf einer zentralen Lagerkugel drehbar gelagert ist. Bei diesen Motoren ist das Spaltrohr als kalottenförmiger Spalttopf ausgebildet, welcher sich konzentrisch um die Lagerkugel erstreckt.

Bei derartigen Umwälzpumpenaggregaten ist es somit erforderlich, sowohl den Stator als auch eine Motorelektronik in entsprechend gedichteten Gehäusen anzuordnen, so dass diese Bauteile nicht mit Feuchtigkeit in Berührung kommen können.

Im Hinblick auf diese Problematik ist es Aufgabe der Erfindung, ein Umwälzpumpenaggregat dahingehend zu verbessern, dass auf einfache Weise eine gedichtete Anordnung von Stator und Motorelektronik in einem Motorgehäuse möglich wird.

Diese Aufgabe wird durch ein Umwälzpumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Umwälzpumpenaggregat weist einen nasslaufenden elektrischen Antriebsmotor auf, das heißt einen Antriebsmotor, bei welchem der Rotor, welcher das Laufrad drehend antreibt, in der zu fördernden Flüssigkeit rotiert. Dazu ist der Rotor von einem Stator des Antriebsmotors durch einen Spalttopf getrennt, so dass der Stator nicht mit der zu fördernden Flüssigkeit in Berührung kommt. Mit dem Rotor drehfest verbunden ist in bekannter Weise ein Kreiselpumpen-Laufrad, welches Flüssigkeit im Inneren eines Pumpengehäuses fördert. Das Pumpengehäuse weist einen Fluideingang und Fluidausgang sowie die erforderlichen Kanalführungen zu dem Laufrad hin und von dem Laufrad weg auf. Mit dem Pumpengehäuse verbunden ist ein Motorgehäuse, welches bei dem erfindungsgemäßen Umwälzpumpenaggregat ein kombiniertes Stator- und Elektronikgehäuse bildet, in welchem sowohl der Stator des Antriebsmotors als auch eine erforderliche Motorelektronik angeordnet sind. So sind vorzugsweise alle elektrischen bzw. elektronischen Komponenten in dem gemeinsamen Motorgehäuse angeordnet. Die Motorelektronik kann insbesondere einen Frequenzumrichter zur Ansteuerung des Antriebsmotors aufweisen, um eine Drehzahlregelung des Antriebsmotors zu ermöglichen.

Erfindungsgemäß ist das Motorgehäuse so ausgebildet, dass es an einem ersten Axialende durch einen Spalttopf des Antriebsmotors verschlossen ist. Dieses erste Axialende ist in Richtung der Längsachse, welche der Drehachse des Antriebsmotors entspricht, gesehen dasjenige Axialende, welches dem Pumpengehäuse zugewandt ist bzw. an das Pumpengehäuse angrenzt. Wenn nachfolgend auf die axiale Richtung Bezug genommen wird, so ist damit stets die Längsrichtung in Richtung der Drehachse des Antriebsmotors gemeint.

Als Spalttopf (Air gap sleeve) im Sinne dieser Erfindung sind beliebig geformte Trennelemente zu verstehen, welche den mit Flüssigkeit gefüllten Rotorraum von dem trockenen Statorraum trennen. So kann der Spalttopf auch ein Spaltrohr sein, welches an seinem sich in das Innere des Motorgehäuses erstreckenden Ende in geeigneter Weise verschlossen ist. Ferner kann der Spalttopf beispielsweise auch als flache Platte oder Scheibe ausgebildet sein, wenn Rotor und Stator nicht ineinander greifen, sondern sich axial gegenüberliegen. Erfindungswesentlich ist lediglich, dass der Spalttopf bzw. das Trennelement zwischen Rotor und Stator das Motorgehäuse an seinem dem Pumpengehäuse zugewandten Ende verschließt, um ein Füllen des Motorgehäuses mit der Vergussmasse zu ermöglichen.

Das Motorgehäuse weist eine äußere Umfangswandung auf, welche insgesamt im Wesentlichen rohrförmig sein kann und in der beschriebenen Weise an dem ersten Axialende durch den Spalttopf verschlossen wird. So bilden der Spalttopf und die Umfangswandung gemeinsam eine topf- bzw. becherförmige Gestalt, wobei der Spalttopf sich ausgehend von dem ersten Axialende in das Innere des Motorgehäuses hinein erstrecken kann. Dennoch definiert der Spalttopf gemeinsam mit einer Umfangswandung des Motorgehäuses einen Innenraum, welcher zu dem ersten Axialende hin durch den Spalttopf verschlossen ist. An dem abgewandten zweiten Axialende, in der genannten Längsrichtung gesehen, weist das Motorgehäuse eine Öffnung auf, welche durch einen Deckel verschlossen ist. Dabei stellt der Deckel ein separates Bauteil dar, welches zumindest weitgehend getrennt von der Umfangswandung des Motorgehäuses ausgebildet ist und nachträglich an die Umfangswandung angesetzt ist, um die Öffnung an dem zweiten Axialende zu verschließen.

Im Inneren des Motorgehäuses ist dieses in einem Bereich, welcher an das erste Axialende, das heißt den dort angeordneten Spalttopf angrenzt, mit einer Vergussmasse gefüllt. Dabei umgibt bzw. umhüllt die Vergussmasse sowohl den Stator als auch die Motorelektronik im Inneren des Motorgehäuses. Die Vergussmasse stellt somit eine Einkapselung der elektrischen bzw. elektronischen Bauteile im Inneren des Motorgehäuses dar, welche die elektrischen bzw. elektronischen Bauteile insbesondere nach außen hin abdichtet und vor Feuchtigkeit schützt. Auf diese Weise werden weitere Dichtungen am Motorgehäuse, beispielsweise zwischen dem Deckel und einer Umfangswandung des Motorgehäuses oder zwischen dem Spalttopf und dem Motorgehäuse überflüssig. Es kann somit auf sehr einfache Weise eine die elektrische Sicherheit gewährleistende Abdichtung aller elektrischen Komponenten im Inneren des Motorgehäuses erreicht werden. Darüber hinaus stellt die Vergussmasse eine zusätzliche Fixierung des Stators und der Motorelektronik im Inneren des Motorgehäuses dar, so dass Vibrationen der im Motorgehäuse angeordneten Bauteile vermieden werden. Die Bauteile werden durch die umgebende Vergussmasse sicher fixiert.

Der Deckel ist mit dem Motorgehäuse vorzugsweise kraftschlüssig, formschlüssig und/oder stoffschlüssig verbunden. Dabei ist dies eine Verbindung, welche nachträglich nach der Montage des Stators und der Motorelektronik im Inneren des Motorgehäuses hergestellt werden kann. Insbesondere können Rast- bzw. Schnappverbindungen vorgesehen sein, welche ein Aufrasten des Deckels auf dem Motorgehäuse ermöglichen. Alternativ oder zusätzlich sind jedoch auch eine Klemmverbindung und/oder eine stoffschlüssige Verbindung, wie beispielsweise Schweißen oder Kleben, möglich. Besonders bevorzugt ist die Verbindung zwischen dem Deckel und dem Motorgehäuse bzw. einer Umfangswandung des Motorgehäuses so ausgebildet, dass diese nach der Verbindung zwischen Deckel und Motorgehäuse nicht mehr zerstörungsfrei zu lösen ist. So kann ein dauerhafter Verschluss des Motorgehäuses durch den Deckel realisiert werden.

Gemäß einer besonderen Ausführungsform der Erfindung können an oder in dem Deckel Anzeige- und/oder Bedienelemente angeordnet sein. Die Anzeigeelemente können beispielsweise Leuchtdioden, ein Display oder ähnliches sein. Darüber hinaus können Bedienelemente, wie beispielsweise Schalter oder Taster, an oder in dem Deckel angeordnet sein. Dies können beispielsweise Sensortaster oder auch Drucktaster sein. Zum elektrischen Anschluss der Bedien- und/oder Anzeigeelemente ist es möglich, in dem Deckel eine zusätzliche Leiterplatte anzuordnen, auf welcher diese Bedien- und/oder Anzeigeelemente angeordnet sind. Eine elektrische Verbindung zu der weiteren im Motorgehäuse angeordneten Motorelektronik kann durch Steckkontakte oder auch zumindest eine Kabelverbindung zwischen dem Deckel und der Motorelektronik realisiert werden. Dazu ist es möglich, dass sich entsprechende Anschlusskontakte oder auch zumindest ein Anschlusskabel aus der Vergussmasse zu dem Deckel hin heraus erstrecken.

Weiter bevorzugt ist der mit der Vergussmasse gefüllte Bereich von dem zweiten Axialende des Motorgehäuses und/oder einer Innenseite des Deckels beabstandet. Insbesondere ist die dem zweiten Axialende zugewandte Oberfläche der Vergussmasse von dem zweiten Axialende des Motorgehäuses bzw. dem zweiten Axialende der Umfangswandung des Motorgehäuses und/oder der Innenseite des Deckels beabstandet. Eine solche Ausgestaltung ermöglicht einen einfacheren Verguss, da ein Verguss in der Weise möglich ist, dass zum Vergießen das Motorgehäuse so ausgerichtet wird, dass die Öffnung am zweiten Axialende oben gelegen ist und die Vergussmasse durch die zweite Öffnung in das Innere des Motorgehäuses eingegossen werden kann. Wenn es nicht erforderlich ist, dieses Motorgehäuse, welches durch die Umfangswandung definiert wird, bis zur Oberseite vollständig zu füllen, hat dies den Vorteil, dass keine exakte Dosierung der Vergussmasse erforderlich ist. Vielmehr ist es ausreichend, so viel Vergussmasse einzugießen, dass der Stator und die Motorelektronik vollständig von der Vergussmasse umhüllt sind. Dazu ist es bevorzugt, dass der Stator und die Motorelektronik von dem zweiten Axialende und insbesondere der Öffnung am zweiten Axialende um ein Maß beabstandet sind, welches größer ist als die erforderliche Umhüllungsdicke, mit welcher die Vergussmasse die elektrischen bzw. elektronischen Bauteile umhüllen muss. Das heißt das Maß ist so groß gewählt, dass gewisse Schwankungen der Füllmenge der Vergussmasse tolerierbar sind.

Erfindungsgemäß weist das Umwälzpumpenaggregat zumindest ein elektrisches Anschlusskabel auf. Ein solches elektrisches Anschlusskabel kann insbesondere der Energieversorgung des Antriebsmotors dienen. Zusätzlich können das Anschlusskabel oder ein zusätzliches Anschlusskabel auch der Datenkommunikation dienen, beispielsweise um das Umwälzpumpenaggregat mit einer externen Steuerung oder gegebenenfalls mit externen Sensoren zu verbinden. Das zumindest eine elektrische Anschlusskabel ist so angeordnet, dass es sich aus dem Motorgehäuse nach außen erstreckt. Dazu weist das Motorgehäuse bevorzugt eine Öffnung auf, durch welche sich das Anschlusskabel nach außen erstreckt. Besonders bevorzugt ist diese Öffnung in der Schnittstelle bzw. im Kontaktbereich zwischen Deckel und Motorgehäuse bzw. zwischen Deckel und Umfangswandung des Motorgehäuses ausgebildet. Dies hat den Vorteil, dass das Anschlusskabel bei abgenommenem Deckel sehr einfach eingelegt werden kann und dann der Deckel aufgesetzt werden kann, wobei die für das Anschlusskabel erforderliche Öffnung zwischen Deckel und Motorgehäuse verbleibt. So muss das Anschlusskabel nicht durch eine Öffnung in das Innere des Motorgehäuses gefädelt werden. Aufgrund der Vergussmasse im Inneren des Motorgehäuses ist dabei vorzugsweise keine Dichtung im Bereich der Öffnung erforderlich.

Erfindungsgemäß erstreckt sich das zumindest eine elektrische Anschlusskabel mit einem Ende derart in die Vergussmasse hinein, dass dieses Ende so in der Vergussmasse eingebettet ist, dass die Vergussmasse mit einer Ummantelung des Anschlusskabels als Zugentlastung in Eingriff ist. Das heißt die Vergussmasse bildet die Zugentlastung und es sind vorzugsweise keine weiteren Klemmmittel für eine Zugentlastung erforderlich, wodurch die Montage weiter vereinfacht wird. Gegebenenfalls ist es möglich, vor dem Eingießen auf dem Anschlusskabel Fixierelemente, beispielsweise klemmend, zu befestigen, welche von der Vergussmasse später formschlüssig umgeben werden und so zu einer besseren Fixierung des Anschlusskabels in der Vergussmasse dienen. Gemäß einer weiteren möglichen Ausführungsform wäre es auch möglich, in das Anschlusskabel einen Knoten zu machen, welcher mit in die Vergussmasse eingegossen wird. Auch so kann eine formschlüssige Verbindung zwischen Anschlusskabel und Vergussmasse erreicht werden. Auch wäre eine Strukturierung der Ummantelung des Anschlusskabels möglich, um einen besseren Eingriff zwischen Vergussmasse und der Ummantelung zu erreichen.

Ferner erstreckt sich das Anschlusskabel in einer dem zweiten Axialende zugewandten Richtung aus der Vergussmasse heraus und erstreckt sich im weiteren Verlauf quer zu dieser Richtung aus dem Motorgehäuse nach außen. Eine solche Ausgestaltung hat den Vorteil, dass in dem Bereich, welcher mit der Vergussmasse gefüllt ist, keine radial nach außen gerichtete Öffnung in dem Motorgehäuse bzw. dessen Umfangswandung ausgebildet werden muss, durch welche beim Einfüllen der Vergussmasse diese nach außen laufen könnte. Bevorzugt erstreckt sich das Anschlusskabel vielmehr aus einer Oberfläche der Vergussmasse nach außen, welche beim Gießen oben gelegen ist. Die sich dann außerhalb der Vergussmasse anschließende Umlenkung des Anschlusskabels, so dass es sich quer zur Längsrichtung des Umwälzpumpenaggregates aus dem Motorgehäuse erstreckt, hat den Vorteil, dass die Stirnseite des Motorgehäuses, welche von dem Deckel gebildet wird, nicht durch das Anschlusskabel durchdrungen werden muss. So muss in diesem Bereich keine spezielle Öffnung vorgesehen werden und das Anschlusskabel kann bevorzugt in der oben beschriebenen Weise zwischen dem Motorgehäuse und dem Deckel nach außen geführt werden, wodurch sich die Montage vereinfacht. Die Umlenkung des Kabels zwischen dem Austritt aus der Vergussmasse und dem Austritt aus dem Motorgehäuse erfolgt in einem nicht mit Vergussmasse gefüllten Freiraum im Inneren des Motorgehäuses.

Gemäß einer weiteren bevorzugten Ausführungsform der Erfindung ist das Motorgehäuse aus zumindest zwei Gehäuseteilen gebildet, wobei ein erster Gehäuseteil mit dem Pumpengehäuse verbunden ist und ein zweiter Gehäuseteil mit dem ersten Gehäuseteil kraft-, form- und/oder stoffschlüssig verbunden ist, wobei der erste und der zweite Gehäuseteil gemeinsam den Innenraum mit dem mit der Vergussmasse gefüllten Bereich begrenzen. Der erste Gehäuseteil ist vorzugsweise an dem ersten Axialende mit dem Spalttopf verbunden. Der zweite Gehäuseteil ist weiter bevorzugt rohrförmig ausgebildet und an dem dem ersten Axialende abgewandten offenen Ende des ersten Gehäuseteils mit diesem verbunden. Besonders bevorzugt können in diesem Bereich der erste und der zweite Gehäuseteil ineinandergesteckt sein, so dass ihre Umfangswandungen einander überlappen. So kann zum einen eine dichte Verbindung, welche ein Herausfließen der Vergussmasse verhindert, gebildet werden. Zum anderen kann auch eine kraftschlüssige bzw. klemmende Fixierung des ersten Gehäuseteils an dem zweiten Gehäuseteil erreicht werden. Besonders bevorzugt überlappt der zweite Gehäuseteil den ersten Gehäuseteil an seinem Außenumfang. Das heißt der erste Gehäuseteil hat an seinem dem Pumpengehäuse zugewandten Axialende einen Innenquerschnitt, welcher dem Außenquerschnitt des ersten Gehäuseteils an seinem dem Pumpengehäuse abgewandten Axialende entspricht.

Die zweiteilige Ausbildung des Motorgehäuses hat den Vorteil, dass in dem ersten Gehäuseteil der Stator und der Spalttopf, das heißt die wesentlichen Komponenten des Antriebsmotors fixiert werden können. Dieser erste Gehäuseteil kann als Standardteil ausgebildet sein, während der zweite Gehäuseteil dann leicht an verschiedene kundenspezifische Anforderungen anpassbar ist. So kann der zweite Gehäuseteil leicht im Design variiert werden und darüber hinaus insbesondere auch in seiner Größe und/oder Form an die aufzunehmende Elektronik angepasst werden. Je nachdem welche Funktionalität das Umwälzpumpenaggregat haben soll, können unterschiedliche elektronische Komponenten in dem zweiten Gehäuseteil angeordnet sein und/oder Bedienelemente an dem zweiten Gehäuseteil und/oder dem Deckel ausgebildet bzw. angeordnet sein.

Besonders bevorzugt sind der erste und der zweite Gehäuseteil angrenzend an den Innenraum so geformt, dass die Vergussmasse einen Formschluss zwischen dem ersten und dem zweiten Gehäuseteil bewirkt. Dazu können der erste und/oder der zweite Gehäuseteil dem Innenraum zugewandte Vorsprünge bzw. Schultern aufweisen, welche von der Vergussmasse so umschlossen werden, dass von der Vergussmasse umgriffene Hinterschneidungen in axialer Richtung gebildet werden. So kann die Vergussmasse verhindern, dass der erste und der zweite Gehäuseteil in der axialen Richtung, in welcher sie zuvor zusammengefügt worden sind, wieder auseinandergezogen werden. Eine solche formschlüssige Verbindung kann zusätzlich zu einer kraftschlüssigen Verbindung zwischen den beiden Gehäuseteilen vorhanden sein.

Gemäß einer weiteren bevorzugten Ausführungsform ist der erste Gehäuseteil mittels einer Überwurfmutter an dem Pumpengehäuse fixiert, wobei die Überwurfmutter eine Auskragung an dem ersten Gehäuseteil übergreift und mit einem Gewinde an dem Pumpengehäuse in lösbarem Eingriff ist. Die Überwurfmutter kann sich dabei relativ zu dem ersten Gehäuseteil drehen, um auf das Gewinde des Pumpengehäuses aufgeschraubt und von diesem wieder abgeschraubt zu werden. Eine solche Überwurfmutter ermöglicht eine einfach zu lösende Verbindung zwischen dem Motorgehäuse und dem Pumpengehäuse, so dass das Motorgehäuse zu Wartungs- und Reparaturzwecken leicht von dem Pumpengehäuse abgenommen werden kann. Die Überwurfmutter weist vorzugsweise einen radial nach innen gerichteten Kragen auf, welcher einen Innendurchmesser hat, welcher kleiner ist als der Außendurchmesser der radial nach außen gerichteten Auskragung an dem ersten Gehäuseteil. So kommt die Überwurfmutter in axialer Richtung an der Auskragung zur Anlage und kann auf die Auskragung eine Axialkraft ausüben, um den ersten Gehäuseteil des Motorgehäuses und damit das gesamte Motorgehäuse gegen das Pumpengehäuse zu drücken. Die Drehachse der Überwurfmutter entspricht bevorzugt der Drehachse des Antriebsmotors oder erstreckt sich parallel zu dieser.

Weiter bevorzugt ist der zweite Gehäuseteil an dem ersten Gehäuseteil so angeordnet, dass der zweite Gehäuseteil die Überwurfmutter in axialer Richtung an dem ersten Gehäuseteil sichert. Dies erfolgt beispielsweise in der Weise, dass der zweite Gehäuseteil den ersten Gehäuseteil an seinem Außenumfang übergreift, so dass die Stirnkante des zweiten Gehäuseteils, welche dem Pumpengehäuse zugewandt ist, einer axialen Stirnseite der Überwurfmutter derart gegenüberliegt, dass die Überwurfmutter, wenn sie sich in axialer Richtung zu dem zweiten Gehäuseteil hin bewegt, an dieser Stirnkante zur Anlage kommt. Die Montage erfolgt dabei in der Weise, dass die Überwurfmutter auf den ersten Gehäuseteil aufgesetzt wird, bevor der zweite Gehäuseteil mit dem ersten Gehäuseteil verbunden wird. Auf diese Weise wird die Überwurfmutter unverlierbar an dem Motorgehäuse gesichert.

Gemäß einer weiteren bevorzugten Ausführungsform ist der Spalttopf einstückig mit dem Motorgehäuse, insbesondere aus Kunststoff, ausgebildet. Wenn das Motorgehäuse aus zwei Gehäuseteilen ausgebildet ist, ist der Spalttopf somit vorzugsweise einstückig mit dem ersten Gehäuseteil gefertigt. Die einstückige Fertigung von Spalttopf und dem Motorgehäuse bzw. dem ersten Gehäuseteil des Motorgehäuses hat den Vorteil, dass keine Montage von Spalttopf und Motorgehäuse erforderlich ist. Ferner ist das Motorgehäuse an dem ersten Axialende so direkt dicht verschlossen, um die oben beschriebene topf- bzw. becherförmige Gestalt zur Aufnahme der Vergussmasse zu bilden. Zusätzliche Abdichtungen sind in diesem Bereich nicht erforderlich.

Gemäß einer besonderen Ausführungsform der Erfindung ist der Antriebsmotor ein Kugelmotor mit einem kalottenförmigen Spalttopf. Wie oben beschrieben, zeichnet sich ein solcher Kugelmotor dadurch aus, dass der Rotor mit dem Laufrad auf einer zentralen Lagerkugel gelagert ist, welche neben der Drehbewegung um die Längs- bzw. Drehachse auch eine leichte Pendelbewegung auf der Kugeloberfläche quer zu dieser Drehachse ermöglicht. Der Rotor hat dazu bevorzugt eine halbkugelförmige Gestalt und der kalottenförmige Spalttopf weist eine Krümmung konzentrisch zur Außenkontur des Rotors um die zentrale Lagerkugel auf. Der Rotor bildet bevorzugt eine Baueinheit mit dem Laufrad. Der Rotor mit dem Laufrad rotiert somit in einem Rotorraum, welcher zwischen dem Motorgehäuse und dem Pumpengehäuse ausgebildet wird. Wenn das Motorgehäuse von dem Pumpengehäuse getrennt wird, sind Rotor und Laufrad leicht entnehmbar, beispielsweise zu Reinigungs- oder Wartungswecken.

Der Stator ist vorzugsweise an dem Spalttopf fixiert. Dies bedeutet, dass der Stator vorzugsweise nicht an der Innenwandung des Motorgehäuses, das heißt der Innenseite der Umfangswandung des Motorgehäuses fixiert ist. Vielmehr kann bevorzugt zwischen Außenumfang des Stators und Innenumfang der Umfangswandung des Motorgehäuses ein Freiraum verbleiben, welcher von der Vergussmasse gefüllt ist. Die Fixierung des Stators am Spalttopf hat den Vorteil, dass der Stator vor dem Einfüllen der Vergussmasse in das Motorgehäuse bereits in einer definierten Lage fixiert ist, so dass die Fixierung nicht allein durch die Vergussmasse bewirkt wird. Die Vergussmasse kann jedoch eine zusätzliche Fixierung darstellen, welche insbesondere Vibrationen verhindern kann. Besonders bevorzugt ist der Stator an dem Spalttopf durch Rastmittel fixiert. Die Rastmittel können als Rastzungen vorzugsweise einstückig mit dem Spalttopf ausgebildet sein, so dass der Stator sehr einfach von der Innenseite des Motorgehäuses auf den Spalttopf aufgerastet werden kann. Die Rastmittel sorgen dabei vorzugsweise dafür, dass der Stator gegen die Außenseite des Spalttopfes gedrückt wird, so dass der Stator möglichst nah zu dem Rotorraum positioniert wird, um den magnetischen Wirkungsgrad des Antriebsmotors zu verbessern.

Gemäß einer weiteren bevorzugten Ausführungsform der Erfindung, weitet sich das Motorgehäuse zu dem zweiten Axialende hin im Querschnitt auf. Das heißt das Motorgehäuse weist eine im Wesentlichen konische Gestalt auf. Dies ermöglicht eine besonders große Öffnung an dem zweiten Axialende, welche das Einfüllen der Vergussmasse vereinfacht.

Die Öffnung an dem zweiten Axialende erstreckt sich vorzugsweise im Wesentlichen über den gesamten Querschnitt des Motorgehäuses. Wie oben beschrieben, weist das Motorgehäuse bevorzugt eine Umfangswandung auf, deren Stirnkante an dem zweiten Axialende die Öffnung definiert bzw. umgibt. Die Öffnung entspricht somit bevorzugt dem Innenquerschnitt der Umfangswandung an dem zweiten Axialende.

Wie beschrieben ist die Vergussmasse vorzugsweise durch die Öffnung hindurch in den Innenraum eingefüllt. Daher ist eine besonders große Öffnung von Vorteil, um ein einfaches Einfüllen der Vergussmasse zu ermöglichen.

Bei der Vergussmasse handelt es sich vorzugsweise um ein Kunststoffmaterial, insbesondere um ein Elektro-Gießharz. Ein solches kann beispielsweise ein Zweikomponentenharz sein, insbesondere auf Polyurethanbasis. Es können jedoch auch andere geeignete Vergussmassen und/oder Gießharze zur Verwendung kommen. Dabei können z.B. Vergussmassen Verwendung finden, welche chemisch oder physikalisch, beispielsweise thermisch, aushärten.

Das erfindungsgemäße Umwälzpumpenaggregat kann in der nachfolgend beschriebenen Weise gefertigt werden. Das Umwälzpumpenaggregat weist ein Pumpengehäuse und ein mit diesem verbundenes Motorgehäuse auf, wobei das Motorgehäuse ein integriertes Stator- und Elektronikgehäuse bildet, welches den Stator und die Motorelektronik des Antriebsmotors des Umwälzpumpenaggregates aufnimmt. Das Verfahren betrifft die Fertigung bzw. Montage des Motorgehäuses. Dazu wird zunächst ein Motorgehäuse bereitgestellt, welches an einem ersten Axialende durch einen Spalttopf verschlossen ist und an einem entgegensetzten zweiten Axialende eine Öffnung aufweist. Dieses Motorgehäuse weist somit bevorzugt eine im Wesentlichen rohrförmige Umfangswandung auf, welche an dem ersten Axialende durch den Spalttopf verschlossen und an dem zweiten Axialende offen ausgebildet ist bzw. die beschriebene Öffnung aufweist. Der Spalttopf kann sich dabei durchaus um ein gewisses Maß in das Innere des Motorgehäuses, das heißt in den von der Umfangswandung definierten Bereich hinein erstrecken. Es verbleibt jedoch ein von der Umfangswandung begrenzter und durch den Spalttopf zum ersten Axialende hin verschlossener Innenraum des Motorgehäuses. In ein solches Motorgehäuse werden der Stator und die Motorelektronik durch die beschriebene Öffnung hindurch eingesetzt und in geeigneter Weise fixiert, beispielsweise in der oben beschriebenen Weise. Im Inneren des Motorgehäuses und/oder an dem Spalttopf können dazu geeignete Befestigungselemente vorhanden sein.

Nach der Fixierung von Stator und Motorelektronik im Inneren des Motorgehäuses wird dieses mit einer Vergussmasse zumindest in dem Bereich, in welchem der Stator und die Motorelektronik angeordnet sind, verfüllt. Das Einfüllen der Vergussmasse erfolgt drucklos durch die Öffnung hindurch. Dazu wird das Motorgehäuse so ausgerichtet, dass seine Öffnung nach oben gerichtet ist und das Motorgehäuse so einen Topf bzw. Becher bildet, mit dem Spalttopf als Boden. Die Vergussmasse kann somit einfach von oben in das Innere des Motorgehäuses eingegossen werden, bis dieses ausreichend mit Vergussmasse gefüllt ist, so dass der Stator und die Motorelektronik vollständig von der Vergussmasse überdeckt sind. Anschließend wird die Öffnung durch einen Deckel verschlossen, wobei der Deckel beispielsweise in der oben beschriebenen Weise mit dem Motorgehäuse verrastet werden kann. Besonders bevorzugt wird ein Anschlusskabel, welches mit der Motorelektronik verbunden ist, zwischen dem Deckel und dem Motorgehäuse nach außen geführt, wobei das Anschlusskabel bzw. dessen an die Motorelektronik angrenzendes Ende mit in die Vergussmasse eingebettet ist.

Bezüglich weiterer bevorzugter Details des Verfahrens wird auf die obige Beschreibung des Umwälzpumpenaggregates verwiesen, aus welcher sich ebenfalls bevorzugte Verfahrensmerkmale direkt oder indirekt ergeben.

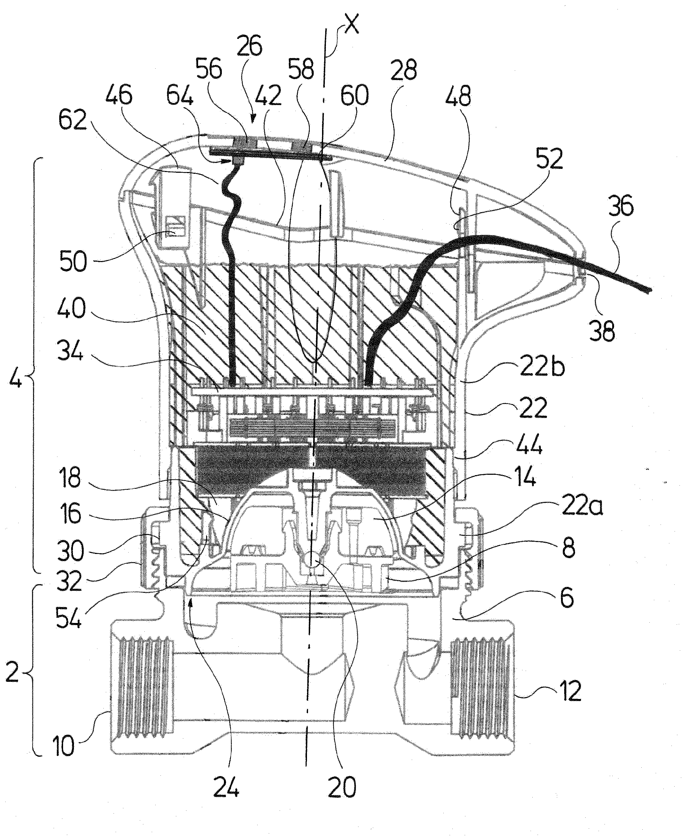

Nachfolgend wird die Erfindung beispielhaft anhand der beigefügten Figur beschrieben. Diese zeigt schematisch eine Schnittansicht eines erfindungsgemäßen Umwälzpumpenaggregates.

Das gezeigte Umwälzpumpenaggregat besteht im Wesentlichen aus zwei Teilen, nämlich einer Pumpe 2 sowie einem elektrischen Antriebsmotor 4. Die Pumpe 2 weist ein Pumpengehäuse 6 auf, welches vorzugsweise als Gussteil aus Metall ausgebildet ist. Das Pumpengehäuse 6 weist in bekannter Weise einen Eingang 10 und einen Ausgang 12 auf. Das Pumpengehäuse 6 weist in seinem Inneren ferner in bekannter Weise die erforderlichen Strömungswege zu einem Laufrad 8 hin und von dem Laufrad 8 weg zu dem Ausgang 12 auf. Das Laufrad 8 rotiert in einem Rotorraum, welcher zwischen dem Pumpengehäuse 6 und dem unten beschriebenen Spalttopf ausgebildet ist. Das Laufrad 8 ist fest mit einem Rotor 14 des Antriebsmotors 4 verbunden. Der Rotor 14 ist bevorzugt ein Permanentmagnetrotor.

Der elektrische Antriebsmotor 4 ist als nasslaufender Elektromotor ausgebildet und weist einen als Trennkalotte 16 ausgebildeten Spalttopf auf, welcher den Rotorraum, in welchem der Rotor 14 mit dem Laufrad 8 angeordnet ist, fluiddicht von einem Statorraum, in welchem der Stator 18 des elektrischen Antriebsmotors gelegen ist, trennt. Der hier gezeigte Motor ist als Kugelmotor ausgebildet. Das heißt der Spalttopf 16 weist eine kalottenförmige Gestalt auf und der Rotor 14 ist zentral auf einer Kugel 20 drehbar gelagert. Die Trennkalotte 16 weist eine Krümmung konzentrisch zu der Kugel 20 auf. Der Rotor 14 ist an seinem Au-βenumfang korrespondierend geformt, so dass er im Inneren des Trennkalotte 16 um die Längsachse X rotieren kann und sich um ein gewisses Maß quer zu der Längsachse X verschwenken kann. Es ist jedoch zu verstehen, dass das nachfolgend beschriebene erfindungsgemäße Prinzip der Ausgestaltung des elektrischen Antriebsmotors auch mit anderen Motoren zur Anwendung kommen kann.

Der elektrische Antriebsmotor 4 weist ein Motorgehäuse 22 auf, welches in diesem Fall aus zwei Gehäuseteilen 22a und 22b gebildet ist. Das Motogehäuse 22 stellt ein kombiniertes Stator- und Elektronikgehäuse dar, welches neben dem Stator 18 die erforderliche Motorelektronik, welche hier in Form der Leiterplatte 34 dargestellt ist, beherbergt. Das Motorgehäuse 22 weist ein erstes Axialende 24 auf, an welchem es mit dem Pumpengehäuse 6 verbunden ist. An dem der Richtung der Längsachse X entgegengesetzten zweiten Axialende 26 ist das Motorgehäuse 22 durch einen Deckel 28 verschlossen. Die Längs- bzw. Drehachse X ist dabei die Längsachse des Pumpenaggregates, welche der Drehachse des Rotors 14 und des Laufrades 8 entspricht.

Der erste Gehäuseteil 22a, welcher mit dem Pumpengehäuse 6 verbunden ist, ist einstückig mit der Trennkalotte 16 ausgebildet, so dass die Trennkalotte 16 den Innenraum des Gehäuseteils 22a zum ersten Axialende 24 hin verschließt. So wird durch die rohr- bzw. ringförmige Umfangswandung des Motorgehäuses 22 und die den Boden bildende Trennkalotte 16 ein insgesamt topf- bzw. becherförmiges Motorgehäuse geschaffen. Am Außenumfang weist der erste Gehäuseteil 22a des Motorgehäuses 22 eine ringförmige Auskragung 30 auf, welche von einer Überwurfmutter 32 übergriffen wird, welche mit dem Pumpengehäuse 6 verschraubt ist. So wird eine lösbare Verbindung des elektrischen Antriebsmotors 4 bzw. des Motorgehäuses 22 mit der Pumpe 2 bzw. dem Pumpengehäuse 6 geschaffen. Der erste Gehäuseteil 22a ist von dem zweiten Gehäuseteil 22b umfänglich übergriffen, wobei der zweite Gehäuseteil 22b mit seinem Innenumfang auf den Außenumfang des ersten Gehäuseteils 22a aufgepresst bzw. aufgeschoben ist. Die Überwurfmutter 32 ist vor dem Aufsetzen des zweiten Gehäuseteils 22b auf den ersten Gehäuseteil 22a aufgesetzt. Der zweite Gehäuseteil 22b übergreift so die Überwurfmutter 32, so dass diese an dem ersten Gehäuseteil 22 unverlierbar gesichert ist. Die Gehäuseteile 22a und 22b des Motorgehäuses 22 umschließen gemeinsam einen Innenraum, in welchem der Stator 18 sowie eine Leiterplatte 34 mit der Motorelektronik angeordnet sind. Die Leiterplatte 34 kontaktiert die Statorspulen des Stators 18 und trägt elektrische bzw. elektronische Bauelemente zur Steuerung des Antriebsmotors. An der Leiterplatte 34 angeschlossen ist ferner ein elektrisches Anschlusskabel 36, welches durch eine Öffnung 38 aus dem Motorgehäuse 22 nach außen geführt ist. Die Öffnung 38 liegt zwischen dem Motorgehäuse 22 und dem Deckel 28, so dass das Anschlusskabel 36 vor dem Schließen des Deckels 28 in das Motorgehäuse 22 eingeführt werden kann.

Erfindungsgemäß ist das Innere bzw. der Innenraum des Motorgehäuses 22 mit einer Vergussmasse 40, welche in der Zeichnung schraffiert dargestellt ist, ausgefüllt. Die Vergussmasse 40 füllt dabei einen an das erste Axialende 24 angrenzenden Bereich im Inneren des Motorgehäuses 22 derart aus, dass der gesamte Stator 18 sowie die Leiterplatte 34 mit den elektrischen bzw. elektronischen Bauteilen von der Vergussmasse 40 vollständig umhüllt sind. Die Vergussmasse 40 wird in das Statorgehäuse 22 durch eine Öffnung 42 an dem ersten Axialende 26 vor dem Verschließen des Deckels 28 eingefüllt. Die Öffnung 42 erstreckt sich über die gesamte Stirnseite, das heißt über den gesamten Querschnitt des Motorgehäuses 22, an dessen zweiten Axialende 26. Die Öffnung 42 wird durch die axiale Stirnkante der Umfangswandung des Gehäuseteils 22b definiert bzw. begrenzt. Das heißt bei vertikaler Ausrichtung, wie in der Figur gezeigt, ist ohne den Deckel 28 der Gehäuseteil 22b und damit das Motorgehäuse 22 nach oben hin vollständig geöffnet. Zusätzlich erweitert sich das Motorgehäuse 22 ausgehend von dem ersten Axialende 24 zum zweiten Axialende 26 im Querschnitt bezogen auf die Längsachse X. Dies ermöglicht eine sehr große Öffnung 42, durch welche die Vergussmasse 40 eingefüllt werden kann. Die Vergussmasse 40 füllt das Innere des Motorgehäuses 22 nicht bis zu der Kante der Öffnung 42 bzw. bis zum zweiten Axialende 26 aus. Dies hat fertigungstechnische Vorteile, da so die Menge der Vergussmasse 40 nicht exakt dosiert werden muss. Vielmehr kann bei vertikaler Ausrichtung der Längsachse X die Vergussmasse einfach in die dabei oben gelegene Öffnung 42 eingegossen werden, bis der Innenraum des Motorgehäuses 22 weitgehend gefüllt ist, ohne dass die Vergussmasse über die Oberkante der Öffnung 42 überläuft. Auch eine Schrumpfung der Vergussmasse beim Erstarren ist unproblematisch. Wesentlich ist nur, dass alle elektrischen bzw. elektronischen Bauteile vollständig von der Vergussmasse 40 überdeckt werden. Als Vergussmasse 40 kommt vorzugsweise ein Harz bzw. Kunstharzmaterial, beispielsweise Epoxidharz, zur Anwendung. Insbesondere kann die Vergussmasse ein Elektro-Gießharz auf Zweikomponentenbasis, beispielsweise Polyurethanbasis sein.

Die Vergussmasse 40 fixiert ferner das Anschlusskabel 36 im Inneren des Motorgehäuses 22, so dass die Vergussmasse 40 als Zugentlastung fungiert und eine zusätzliche Zugentlastung überflüssig wird. So umhüllt die Vergussmasse 40 die Isolierung bzw. Ummantelung des Anschlusskabels 36 über eine gewisse Länge, so dass eine kraftschlüssige und/oder stoffschlüssige Verbindung zwischen der Vergussmasse 40 und der Außenseite der Anschlussleitung 36 hergestellt wird. Zusätzlich könnte die Anschlussleitung 36 beispielsweise auch noch mit einem Knoten oder anderen Hinterschneidungen am Außenumfang versehen werden, welche von der Vergussmasse 40 umgriffen werden, so dass eine formschlüssige Verbindung zwischen Vergussmasse 40 und dem Anschlusskabel 36 erreicht werden kann.

Die Vergussmasse 40 sichert darüber hinaus zusätzlich noch die Verbindung zwischen den beiden Gehäuseteilen 22a und 22b des Motorgehäuses 22. Der Gehäuseteil 22b des Motorgehäuses 22 weist an seinem den ersten Gehäuseteil 22a übergreifenden Ende einen nach innen gerichteten umfänglichen Vorsprung 44 auf, welcher am Außenumfang des ersten Gehäuseteils 22a zur Anlage kommt. Da der gesamte Innenraum in diesem Bereich des Motorgehäuses 22 mit der Vergussmasse 40 verfüllt ist, übergreift die Vergussmasse 40 dabei die dem zweiten Axialende 26 zugewandte umfängliche Stirnkante des Vorsprunges 44, so dass der zweite Gehäuseteil 22b nicht mehr von dem ersten Gehäuseteil 22a in axialer Richtung X abgezogen werden kann. Über die Vergussmasse 40 wird somit eine nicht mehr zerstörungsfrei lösbare Verbindung zwischen den Gehäuseteilen 22a und 22b geschaffen.

In diesem Ausführungsbeispiel sind in dem Deckel 28 ein Anzeigeelement 56 in Form einer Leuchtdiode sowie ein Bedienelement 58 in Form einer Taste angeordnet. Die Bedien- und Anzeigeelemente 56, 58 sind an einer an der Innenseite des Deckels 28 gelegenen Leiterplatte 60 angeordnet, welche über eine Kabelverbindung in Form des Verbindungskabels 62 mit der Elektronik auf der Leiterplatte 34 verbunden ist. Das Verbindungskabel 62 ist mit der Leiterplatte 34 elektrisch leitend verbunden und ebenfalls in die Vergussmasse 40 eingegossen. In diesem Beispiel ist das Verbindungskabel 62 über eine Steckverbindung 64 mit der Leiterplatte 60 elektrisch leitend verbunden. Die Steckverbindung 64 ermöglicht es, zunächst das Verbindungskabel 60 mit der Leiterplatte 34 in die Vergussmasse 40 einzugießen und das Verbindungskabel 62 erst nach dem Eingießen vor der Montage des Deckels 28 mit der Leiterplatte 60 zu verbinden. Dazu ist das Verbindungskabel 62 ausreichend lang ausgebildet, wobei die überschüssige Länge des Verbindungskabels 62 dann in dem Freiraum zwischen der Vergussmasse 40 und dem Deckel 28 verbleibt. Es ist zu verstehen, dass die Erfindung jedoch auch ohne diese Bedien- und Anzeigeelemente 56, 58 realisiert werden könnte. Ferner könnten anstatt des Verbindungskabels 62 beispielsweise auch fest angeordnete Steckkontakte in dem Motorgehäuse 22 angeordnet sein, welche beim Aufsetzen des Deckels 28 mit der Leiterplatte 60 elektrisch leitend in Eingriff treten.

Die Verbindung des Deckels 28 mit dem Motorgehäuse 22 bzw. dessen zweiten Teil 22b ist ebenfalls so ausgebildet, dass sie praktisch nicht mehr zerstörungsfrei lösbar ist. Dies wird durch eine oder mehrere im Inneren gelegene Rastzungen 46 und 48 realisiert. Dabei ist die zumindest eine Rastzunge 46 einstückig mit dem Deckel 28 ausgebildet und erstreckt sich im Inneren des Deckels 28 vom Deckel ausgehend in das Innere des Teils 22b des Gehäuses 22. Dort tritt ein Rastvorsprung 50 mit einer Ausnehmung in der Rastzunge 46 formschlüssig in Eingriff. Die zumindest eine Rastzunge 48 ist einstückig mit dem Gehäuseteil 22b des Gehäuses 22 ausgebildet und erstreckt sich ausgehend von dem Motorgehäuse 22 zu dem Deckel 26 in dessen Inneres hinein und tritt dort in entsprechender Weise mit einem Rastvorsprung 52 in Eingriff. Da die Rastverbindungen zwischen den Rastzungen 46, 48 und den Rastvorsprüngen 50, 52 somit nach Fixierung des Deckels 28 an dem Motorgehäuse 22 im Inneren des von dem Motorgehäuse 22 und dem Deckel 28 umschlossenen Raumes gelegen sind, lassen sich die Rastzungen 46 und 48 von außen nicht mehr erreichen und können so nicht von den Rastvorsprüngen 50, 52 außer Eingriff gebracht werden. Somit wird eine zwar leicht durch Verrasten herstellbare, später aber nicht mehr lösbare Verbindung zwischen dem Motorgehäuse 22 und dem Deckel 28 geschaffen.

Die Montage des Antriebsmotors 4, wie er vorangehend beschrieben wurde, erfolgt in der Weise, dass zunächst auf den Gehäuseteil 22a die Überwurfmutter 32 aufgesetzt wird. Anschließend wird der zweite Gehäuseteil 22b auf den ersten Gehäuseteil 22a klemmend aufgeschoben, wodurch die Überwurfmutter 32 in axialer Richtung X auf dem Motorgehäuse 22 fixiert ist. Anschließend wird der Stator 18 durch die Öffnung 42 in das Motorgehäuse 22 eingesetzt und auf dem Außenumfang der Trennkalotte 16 rastend fixiert. Dazu greifen Rasthaken 54 (in der Figur ist nur einer zu sehen) in entsprechende Ausnehmungen am Stator 18 ein, so dass der Stator 18 formschlüssig an der Trennkalotte 16 fixiert ist. Dabei ist der Stator 18 vom Innenumfang der Umfangswandung des Gehäuses 22 beabstandet, das heißt er wird nicht am Innenumfang des Motorgehäuses 22 geklemmt. Mit dem Stator 18 zuvor verbunden ist bevorzugt die Leiterplatte 34 mit der Motorelektronik, an welcher bereits das Anschlusskabel 36 angeschlossen ist. Durch die Rastverbindung an der Trennkalotte 16 sind so der Stator 18 und die an diesem befestigte Leiterplatte 34 mit dem Anschlusskabel 36 bereits im Inneren des Motorgehäuses 22 fixiert. Anschließend wird das Motorgehäuse 22 mit seiner Längsachse X vertikal ausgerichtet und es wird von oben die Vergussmasse 40 eingegossen, bis die Leiterplatte 34 ausreichend überdeckt ist und somit der untere Teil des Motorgehäuses 22 in seinem Inneren mit der Vergussmasse 40 gefüllt ist. Das Anschlusskabel 36 erstreckt sich dabei nach oben, das heißt in einer Richtung im Wesentlichen parallel zur Längsachse X aus der Vergussmasse 40 heraus und wird erst in dem Freiraum zwischen der Oberfläche der Vergussmasse 40 und dem anschließend aufzusetzenden Deckel 28 in Querrichtung umgelenkt. Nach dem Einfüllen der Vergussmasse 40 wird der Deckel 28 auf das Motorgehäuse 22 in der oben beschriebenen Weise aufgesetzt, wobei das Anschlusskabel 36 durch die Öffnung 38, welche zwischen dem Motorgehäuse 22 und dem Deckel 28 ausgebildet ist, nach außen geführt wird. Da ein sehr einfaches schwerkraftbedingtes, druckloses Eingießen der Vergussmasse 40 erfolgt, ist die Montage sehr einfach. Darüber hinaus sind keine zusätzlichen Dichtungen zwischen dem Deckel 28 und dem Motorgehäuse 22 erforderlich.

### Bezugszeichenliste

- 2: Pumpe
- 4: elektrischer Antriebsmotor
- 6: Pumpengehäuse
- 8: Laufrad
- 10: Eingang
- 12: Ausgang
- 14: Rotor
- 16: Trennkalotte
- 18: Stator
- 20: Kugel
- 22: Motorgehäuse
- 22a, 22b: Teile des Motorgehäuses
- 24: erstes Axialende
- 26: zweites Axialende
- 28: Deckel
- 30: Auskragung
- 32: Überwurfmutter
- 34: Leiterplatte
- 36: Anschlusskabel
- 38: Öffnung
- 40: Vergussmasse
- 42: Öffnung
- 44: Vorsprung
- 46,48: Rastzungen
- 50, 52: Rastvorsprünge
- 54: Rasthaken
- 56: Anzeigeelement
- 58: Bedienelement
- 60: Leiterplatte
- 62: Verbindungskabel
- 64: Steckverbindung
- X: Längs- bzw. Drehachse

## Patentansprüche

1. Umwälzpumpenaggregat mit einem nasslaufenden elektrischen Antriebsmotor (4), welches ein Pumpengehäuse (6) sowie ein mit dem Pumpengehäuse (6) verbundenes Motorgehäuse (22) aufweist, wobei das Motorgehäuse (22) als kombiniertes Stator- und Elektronikgehäuse einen Stator (18) des Antriebsmotors (4) sowie eine Motorelektronik (34) beherbergt,
wobei
das Motorgehäuse (22) an einem ersten dem Pumpengehäuse (6) zugewandten Axialende (24) durch einen Spalttopf (16) des Antriebsmotors verschlossen ist, an seinem dem Pumpengehäuse (6) abgewandten zweiten Axialende (26) eine durch einen Deckel (28) verschlossene Öffnung (42) aufweist und in seinem Innenraum in einem an das erste Axialende (24) angrenzenden Bereich mit einer Vergussmasse (40) gefüllt ist, welche den Stator (18) und die Motorelektronik (34) umgibt, **gekennzeichnet durch** zumindest ein elektrisches Anschlusskabel (36), welches sich aus dem Motorgehäuse (22) nach außen erstreckt und mit einem Ende derart in die Vergussmasse (40) eingebettet ist, dass die Vergussmasse (40) mit einer Ummantelung des Anschlusskabels (36) als Zugentlastung im Eingriff ist, wobei sich das Anschlusskabel (36) in einer dem zweiten Axialende (26) zugewandten Richtung aus der Vergussmasse (40) heraus und quer zu dieser Richtung aus dem Motorgehäuse (22) nach außen erstreckt.

2. Umwälzpumpenaggregat nach Anspruch 1, **dadurch gekennzeichnet, dass** der Deckel (28) mit dem Motorgehäuse (22) kraftschlüssig, formschlüssig und/oder stoffschlüssig verbunden ist.

3. Umwälzpumpenaggregat nach Anspruch 1 oder 2, **dadurch gekennzeichnet, dass** an dem Deckel (28) Anzeige- und/oder Bedienelemente (56, 58) angeordnet sind.

4. Umwälzpumpenaggregat nach einem der vorangehenden Ansprüche, **dadurch gekennzeichnet, dass** der mit der Vergussmasse (40) gefüllte Bereich von dem zweiten Axialende (26) des Motorgehäuses (22) und/oder einer Innenseite des Deckels (28) beabstandet ist.

5. Umwälzpumpenaggregat nach einem der vorangehenden Ansprüche, **dadurch gekennzeichnet, dass** das Motorgehäuse (22) zumindest zwei Gehäuseteile (22a, 22b) aufweist, wobei ein erster Gehäuseteil (22a) mit dem Pumpengehäuse (6) verbunden ist, ein zweiter Gehäuseteil (22b) mit dem ersten Gehäuseteil (22a) kraft-, form- und/oder stoffschlüssig verbunden ist und der erste und der zweite Gehäuseteil (22a, 22b) gemeinsam den Innenraum mit dem mit der Vergussmasse (40) gefüllten Bereich begrenzen.

6. Umwälzpumpenaggregat nach Anspruch 5, **dadurch gekennzeichnet, dass** der erste und der zweite Gehäuseteil (22a, 22b) angrenzend an den Innenraum so geformt sind, dass die Vergussmasse (40) einen Formschluss zwischen dem ersten und dem zweiten Gehäuseteil (22a, 22b) bewirkt.

7. Umwälzpumpenaggregat nach Anspruch 5 oder 6, **dadurch gekennzeichnet, dass** der erste Gehäuseteil (22a) mittels einer Überwurfmutter (32) an dem Pumpengehäuse (6) fixiert ist, wobei die Überwurfmutter (32) eine Auskragung (30) an dem ersten Gehäu seteil (22a) übergreift und durch den zweiten Gehäuseteil (22b) an dem ersten Gehäuseteil in axialer Richtung (X) gesichert ist.

8. Umwälzpumpenaggregat nach einem der vorangehenden Ansprüche, **dadurch gekennzeichnet, dass** der Spalttopf (16) einstückig mit dem Motorgehäuse (22), insbesondere aus Kunststoff, ausgebildet ist.

9. Umwälzpumpenaggregat nach einem der vorangehenden Ansprüche, **dadurch gekennzeichnet, dass** der Antriebsmotor (4) ein Kugelmotor mit einem kalottenförmigen Spalttopf (16) ist.

10. Umwälzpumpenaggregat nach einem der vorangehenden Ansprüche, **dadurch gekennzeichnet, dass** der Stator (18) an dem Spalttopf (16) fixiert ist und insbesondere durch Rastmittel (34) an dem Spalttopf (16) gehalten wird.

11. Umwälzpumpenaggregat nach einem der vorangehenden Ansprüche, **dadurch gekennzeichnet, dass** sich das Motorgehäuse (22) zu seinem zweiten Axialende (26) hin im Querschnitt erweitert.

12. Umwälzpumpenaggregat nach einem der vorangehenden Ansprüche, **dadurch gekennzeichnet, dass** sich die Öffnung (42) an dem zweiten Axialende (26) im Wesentlichen über den gesamten Querschnitt des Motorgehäuses (22) erstreckt.

13. Umwälzpumpenaggregat nach einem der vorangehenden Ansprüche, **dadurch gekennzeichnet, dass** die Vergussmasse (40) in den Innenraum durch die Öffnung (42) eingefüllt ist.

14. Umwälzpumpenaggregat nach einem der vorangehenden Ansprüche, **dadurch gekennzeichnet, dass** die Vergussmasse (40) ein Kunststoffmaterial ist.

## Claims

1. A circulation pump assembly with a wet-running, electrical drive motor (4) and which comprises a pump casing (6) as well as a motor housing (22) which is connected to the pump casing (6), wherein the motor housing (22) as a combined stator and electronics housing accommodates a stator (18) of the drive motor (4) as well as motor electronics (34),
wherein
the motor housing (22) at a first axial end (24) which faces the pump casing (6) is closed by an air gap sleeve (16) of the drive motor, at its second axial end (26) which is away from the pump casing (6) comprises an opening (42) closed by a cover (28) and in its interior in a region adjacent the first axial end (24) is filled with a potting mass (40) which surrounds the stator (18) and the motor electronics (34)., **characterised in that** at least one electrical connection cable (36) which extends outwards out of the motor housing (22) and with one end is embedded in the potting mass (40) such that the potting mass (40) is engaged with the sheathing of the connection cable (36) as a strain relief, wherein preferably the connection cable (36) is led out of the potting mass (40) in a direction towards the second axial end (26) and extends outwards out of the motor housing (22) transversely to this direction.

2. A circulation pump assembly according to claim 1, **characterised in that** the cover (28) is non-positively, positively and/or materially connected to the motor housing (22).

3. A circulation pump assembly according to claim 1 or 2, **characterised in that** display and/or operating elements (56, 58) are arranged on the cover (28).

4. A circulation pump assembly according to one of the preceding claims, **characterised in that** the region filled with the potting mass (40) is distanced to the second axial end (26) of the motor housing (22) and/or to an inner side of the cover (28).

5. A circulation pump assembly according to one of the preceding claims, **characterised in that** the motor housing (22) comprises at least two housing parts (22a, 22b), wherein a first housing part (22a) is connected to the pump casing (6), a second housing part (22b) is non-positively, positively and/or materially connected to the first housing part (22a), and the first and the second housing part (22aa, 22b) together delimit the interior with the region filled with the potting mass (40).

6. A circulation pump assembly according to claim 5, **characterised in that** the first and the second housing part (22a, 22b) adjacently to the interior are shaped such that the potting mass (40) effects a positive fit between the first and the second housing part (22a, 22b).

7. A circulation pump assembly according to claim 5 or 6, **characterised in that** the first housing part (22a) is fixed on the pump casing (6) by way of a union nut (32), wherein the union nut (32) engages over a projection (30) on the first housing part (22a) and is secured on the first housing part in the axial direction (X) by the second housing part (22b).

8. A circulation pump assembly according to one of the preceding claims, **characterised in that** the air gap sleeve (16) is designed as one piece with the motor housing (22), in particular of plastic.

9. A circulation pump assembly according to one of the preceding claims, **characterised in that** the drive motor (4) is a spherical motor with a spherical-cap-shaped air gap sleeve (16).

10. A circulation pump assembly according to one of the preceding claims, **characterised in that** the stator (18) is fixed on the air gap sleeve (16) and in particular is held on the air gap sleeve (16) by way of detent means (34).

11. A circulation pump assembly according to one of the preceding claims, **characterised in that** the motor housing (22) widens in cross section to its second axial end (26).

12. A circulation pump assembly according to one of the preceding claims, **characterised in that** the opening (42) at the second axial end (26) extends essentially over the entire cross section of the motor housing (22).

13. A circulation pump assembly according to one of the preceding claims, **characterised in that** the potting mass (40) is filled through the opening (42), into the interior.

14. A circulation pump assembly according to one of the preceding claims, **characterised in that** the potting mass (40) is a plastic material.

## Revendications

1. Groupe motopompe de circulation avec un moteur d'entrainement (4) électrique fonctionnant en milieu humide et présentant un carter de pompe (6) ainsi qu'un carter de moteur (22) relié au carter de pompe (6), le carter de moteur (22) en tant que carter combiné de stator et d'électronique hébergeant un stator (18) du moteur d'entraînement (4) ainsi qu'une électronique de moteur (34), ,
le carter de moteur (22) étant fermé au niveau d'une première extrémité axiale (24) tournée vers le carter de pompe (6), par un pot d'entrefer (16) du moteur d'entraînement, présentant au niveau de sa seconde extrémité axiale (26) détournée du carter de pompe (6), une ouverture (42) fermée par un couvercle (28), et étant rempli, dans son espace intérieur et au sein d'une zone adjacente à la première extrémité axiale (24), avec une masse de scellement (40) qui entoure le stator (18) et l'électronique de moteur (34), **caractérisé par** au moins un câble de connexion électrique (36) qui s'étend de l'intérieur du carter de moteur (22) vers l'extérieur et dont une extrémité est encastrée dans la masse de scellement (40) de telle manière que la masse de scellement (40) vienne en prise avec une gaine du câble de connexion (36) constituant un délestage de traction, le câble de connexion (36) s'étendant de l'intérieur de la masse de scellement (40) vers l'extérieur en direction de la seconde extrémité axiale (26) et de l'intérieur du carter de moteur (22) vers l'extérieur, transversalement à ladite direction.

2. Groupe motopompe de circulation selon la revendication 1, **caractérisé en ce que** le couvercle (28) est relié au carter de moteur (22) par complémentarité de force, de forme et/ou de matière.

3. Groupe motopompe de circulation selon la revendication 1 ou 2, **caractérisé en ce que** des éléments d'affichage et/ou de commande (56, 58) sont agencés sur le couvercle (28).

4. Groupe motopompe de circulation selon l'une quelconque des revendications précédentes, **caractérisé en ce que** la zone remplie avec la masse de scellement (40) se trouve à distance de la seconde extrémité axiale (26) du carter de moteur (22) et/ou d'une face intérieure du couvercle (28).

5. Groupe motopompe de circulation selon l'une quelconque des revendications précédentes, **caractérisé en ce que** le carter de moteur (22) présente au moins deux parties de carter (22a, 22b), une première partie de carter (22a) étant reliée au carter de pompe (6), une seconde partie de carter (22b) étant reliée par complémentarité de force, de forme et/ou de matière à la première partie de carter (22a) et les première et seconde parties de carter (22a, 22b) délimitant ensemble l'espace intérieur comprenant la zone remplie avec la masse de scellement (40).

6. Groupe motopompe de circulation selon la revendication 5, **caractérisé en ce que** les première et seconde parties de carter (22a, 22b) sont formées, adjacentes à l'espace intérieur, de sorte que la masse de scellement (40) crée un verrouillage par complémentarité de forme entre les première et seconde parties de carter (22a, 22b).

7. Groupe motopompe de circulation selon la revendication 5 ou 6, **caractérisé en ce que** la première partie de carter (22a) est fixée au carter de pompe (6) au moyen d'un écrou-raccord (32), l'écrou-raccord (32) enserrant une saillie (30) située sur la première partie de carter (22a) et étant maintenu sur la première partie de carter dans la direction axiale (X) grâce à la seconde partie de carter (22b).

8. Groupe motopompe de circulation selon l'une quelconque des revendications précédentes, **caractérisé en ce que** le pot d'entrefer (16) est réalisé d'un seul tenant avec le carter de moteur (22), et est réalisé en particulier en matière plastique.

9. Groupe motopompe de circulation selon l'une quelconque des revendications précédentes, **caractérisé en ce que** le moteur d'entraînement (4) est un moteur sphérique avec un pot d'entrefer en forme de dôme (16).

10. Groupe motopompe de circulation selon l'une quelconque des revendications précédentes, **caractérisé en ce que** le stator (18) est fixé sur le pot d'entrefer (16) et est maintenu sur le pot d'entrefer (16) en particulier par un moyen d'encliquetage (34).

11. Groupe motopompe de circulation selon l'une quelconque des revendications précédentes, **caractérisé en ce que** le carter de moteur (22) s'élargit en coupe transversale vers sa seconde extrémité axiale (26).

12. Groupe motopompe de circulation selon l'une quelconque des revendications précédentes, **caractérisé en ce que** l'ouverture (42) s'étend essentiellement sur toute la section transversale du carter de moteur (22) à la seconde extrémité axiale (26).

13. Groupe motopompe de circulation selon l'une quelconque des revendications précédentes, **caractérisé en ce que** la masse de scellement (40) est introduite dans l'espace intérieur à travers l'ouverture (42).

14. Groupe motopompe de circulation selon l'une quelconque des revendications précédentes, **caractérisé en ce que** la masse de scellement (40) est un matériau à base de matière plastique.
